Europäisches Patentamt

European Patent Office

Office européen des brevets

(19)

(11) Veröffentlichungsnummer: **0 158 392**
**B1**

(12)

# EUROPÄISCHE PATENTSCHRIFT

(45) Veröffentlichungstag der Patentschrift:
26.07.89

(51) Int. Cl.⁴: **A 47 L 15/42**, B 01 J 49/00

(21) Anmeldenummer: **85200432.4**

(22) Anmeldetag: **20.03.85**

(54) Salzbehälter mit einer Anzeigevorrichtung für die Solekonzentration der Enthärtungsanlage eines Geschirrspülers.

(30) Priorität: **23.03.84 DE 3410651**

(43) Veröffentlichungstag der Anmeldung:
**16.10.85 Patentblatt 85/42**

(45) Bekanntmachung des Hinweises auf die Patenterteilung:
**26.07.89 Patentblatt 89/30**

(84) Benannte Vertragsstaaten:
**CH FR GB IT LI SE**

(56) Entgegenhaltungen:
**DE-U- 1 996 725**
**FR-A- 2 158 586**
**FR-A- 2 209 454**
**FR-A- 2 252 783**
**FR-A- 2 419 909**
**FR-A- 2 465 459**

(73) Patentinhaber: **Bauknecht Hausgeräte GmbH, Am Wallgraben 99, D-7000 Stuttgart 80 (DE)**

(72) Erfinder: **Degel, Josef, P/A INT. OCTROOIBUREAU B.V. Prof. Holstlaan 6, NL-5656 AA Eindhoven (NL)**
Erfinder: **Gumm, Manfred, P/A INT. OCTROOIBUREAU B.V. Prof. Holstlaan 6, NL-5656 AA Eindhoven (NL)**

(74) Vertreter: **Meier, Friedrich, Dipl.-Ing. et al, Philips Patentverwaltung GmbH Wendenstrasse 35 Postfach 10 51 49, D-2000 Hamburg 1 (DE)**

## Beschreibung

Die Erfindung betrifft einen Salzbehälter mit einer Anzeigevorrichtung für die Solekonzentration der Enthärtungsanlage eines Geschirrspülers, der bei geöffnetem Spülbehälter von außen zugänglich und mit einem Verschlußdeckel versehen ist, wobei die Anzeigevorrichtung eine mechanische und/oder elektrische Anzeige ermöglicht und die Messung der Solekonzentration mit Hilfe eines im Salzbehälter in einer Führungsvorrichtung geführten Schwimmers erfolgt.

Die Erfindung geht von einem Stand der Technik aus, wie er in dem DE-GM 19 96 725 und DE-PS 29 38 834 beschrieben ist. Aus den beiden Vorveröffentlichungen ist ersichtlich, daß man bisher den Führungskäfig für den Schwimmer zur Anzeige der Solekonzentration des Salzbehälters direkt an der Innenseite des Verschlußdeckels für den Salzbehälter befestigt hat. Ist das Salzgefäß mit Salz gefüllt, dann treten vor allem bei Verwendung von grobkörnigem Granulat Probleme beim Aufsetzen des Deckels mit dem daran befestigten Führungskäfig auf. Das Aufsetzen dieses Deckels ist nur gegen den Widerstand des granulatförmigen oder auch in Tablettenform eingebrachten Regeneriersalzes mit erheblichem Kraftaufwand möglich. Gleichgültig, ob das Regeneriersalz in feiner oder in grober Körnung vorliegt, ist es ein weiterer genereller Nachteil der Anordnung des Führungskäfigs für den Schwimmer an der Innenseite des Verschlußdeckels, daß beim Aufschrauben des Verschlußdeckels durch Verdrängung Salz zwischen den Deckel und das Gewinde am Einfüllstutzen gelangt, sich beim Zuschrauben einklemmt und dadurch den Schließvorgang erschwert oder dazu führt, daß der Salzbehälterdeckel nicht mehr dicht schließt.

Die vorstehend geschilderten Probleme mit dem Einsetzen der Anzeigevorrichtung in den gefüllten Salzbehälter und undichtem Verschluß treten dann nicht auf, wenn nach DE-B-23 54 662 die Anzeigevorrichtung im Salzbehälter selbst angeordnet ist. Die dort beschriebene Ausführungsform hat jedoch den Nachteil, daß der Führungskäfig nicht betriebsmäßig aus dem Salzbehälter herausgenommen werden oder zumindest soweit entfernt werden kann, daß aus der Führung und vom Schwimmer Ablagerungen beseitigt werden können. Bei dieser bekannten Einrichtung besteht die Gefahr, daß durch Ablagerungen die Anzeige schon nach relativ kurzer Betriebszeit, insbesondere bei Verwendung von ungeeignetem Salz, verfälscht wird.

Der Erfindung liegt die Aufgabe zugrunde, einen geeigneten, einfachen und preiswerten Salzbehälter mit einer mechanischen und/oder elektrischen Anzeigevorrichtung für die Solekonzentration einer Enthärtungsanlage eines Geschirrspülers gemäß dem Oberbegriff des Patentanspruchs 1 zu schaffen, bei dem insbesondere das Verdrängen von eingefüllten Salzkristallen durch den Führungskäfig für den Schwimmer beim Aufschrauben des Salzbehälterdeckels vermieden wird, und bei dem der Verschlußdeckel auch bei gefülltem Salzbehälter ohne Kraftaufwand auf das Salzgefäß aufsetzbar sein soll und der schließlich eine Möglichkeit zur Reinigung des Führungskäfigs und des Schwimmers bietet.

Diese Aufgabe wird erfindungsgemäß dadurch gelöst, daß die Führungsvorrichtung im Bereich des Einfüllstutzens an der Innenwandung des Salzbehältergehäuses derart angeordnet ist, daß die Führungsvorrichtung und der Schwimmer über den Einfüllstutzen zugänglich sind.

Die Vorteile der Erfindung bestehen insbesondere darin, daß durch das Zuordnen des Führungskäfigs als integraler Bestandteil zum Salzbehältergehäuse vermieden wird, daß beim Aufsetzen des Verschlußdeckels eine Verdrängung des nachgefüllten Salzgranulats stattfindet. Dadurch wird ein erheblicher Kraftaufwand beim Aufsetzen des Deckels vermieden und einer Undichtigkeit des Verschlußdeckels vorgebeugt, da kein Salz mehr verdrängt wird und es deshalb auch nicht mehr auf die Gewindegänge oder die Dichtfläche des Einfüllstutzens des Salzbehälters gelangen kann, was Undichtigkeit und Schwergängigkeit des Verschlusses verursacht hat. Durch die gemäß der Erfindung vorgesehene Austauschbarkeit des Schwimmers oder des Führungskäfigs zusammen mit dem Schwimmer ist es ferner möglich, den Führungskäfig und/oder den Schwimmer zu reinigen. Dies ist deshalb von Bedeutung, weil die eingefüllten Regeneriersalze in der Regel Rückstände hinterlassen, die nach einer gewissen Zeit zu einer Verschlammung des Führungskäfigs und des Schwimmers und damit zu einer Fehlanzeige der Solekonzentration führen.

Nachstehend wird die Erfindung anhand von zwei Ausführungsbeispielen und von Zeichnungen näher erläutert. Es zeigen:

Fig. 1 in Teilschnittdarstellung in einem ersten Ausführungsbeispiel einen Salzbehälter mit Anzeigevorrichtung,

Fig. 2 ebenfalls in Teilschnittdarstellung ein zweites Ausführungsbeispiel eines Salzbehälters mit einer Anzeigevorrichtung.

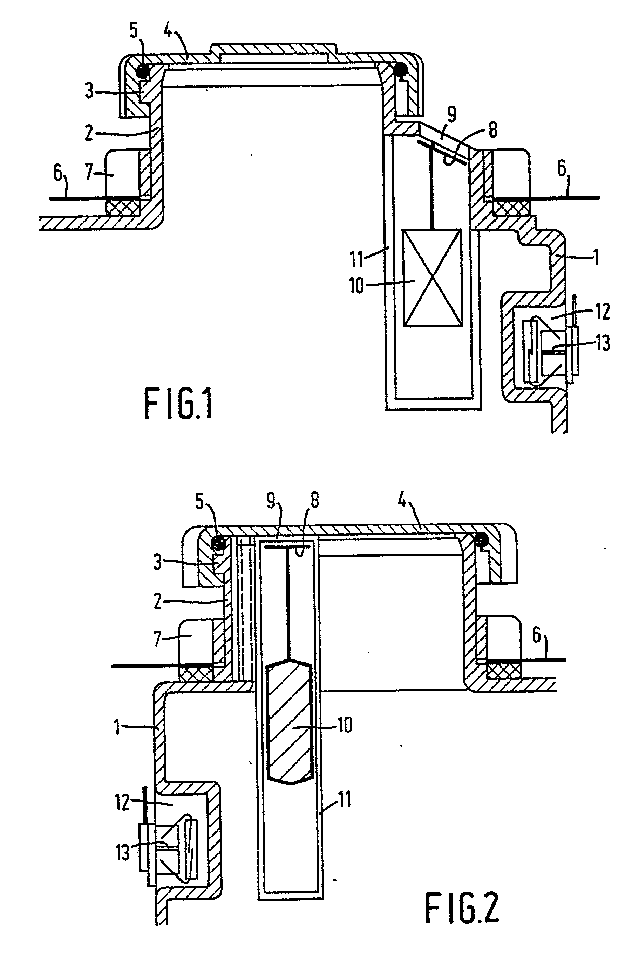

In Fig. 1 ist der obere Teil eines Salzbehälters einer Enthärtungsanlage dargestellt. Der Salzbehälter ist im Behälterboden des Spülbehälters so befestigt, daß er von vorne bei geöffneter Türe des Geschirrspülers in Griffnähe gut erreichbar ist. Der Salzbehälter besteht aus einem Salzbehältergehäuse 1, das einen Einfüllstutzen 2 trägt. Am Einfüllstutzen 2 ist ein Gewinde oder ein Bajonett 3 angebracht, das durch den Verschlußdeckel 4 unter Zuhilfenahme eines Dichtringes 5 verschlossen werden kann. Das Salzbehältergehäuse 1 ist mit seinem Einfüllstutzen 2 mit Hilfe eines Gewinderinges 7 in einer Öffnung des Spülbehälterbodens 6 festgeschraubt.

Der Salzbehälter besitzt eine Anzeigevorrichtung, die in das Salzbehältergehäuse 1 eingebaut ist. Die Anzeige der Solekonzentration erfolgt mechanisch und/oder elektrisch. Es ist durchaus üblich, beide Anzeigearten in dem gleichen Gerät zu vereinigen, so daß am Ort des Einbaus des Salzbehälters eine mechanische Anzeige und gleichzeitig unter Zuhilfenahme eines Reed-Kontakts eine elektrische Anzeige, beispielsweise Beleuchtungsanzeige, auf dem Bedienungsfeld des Geschirrspülers erfolgt. Eine mechanische Anzeigevorrichtung besteht aus einer Anzeigescheibe 8, die hinter einem durchsichtigen Anzeigefeld 9 sichtbar ist. Das durchsichtige Anzeigefeld 9 ist seitlich neben dem Einfüllstutzen 2 im Gehäuse 1 angeordnet. Die Anzeigescheibe 8 ist mit einem Schwimmer 10 versehen, der in einer Führungseinrichtung 11, die als Käfig ausgebildet ist, beweglich geführt ist. Dieser Käfig kann zwei- oder mehrteilig ausgeführt werden.

Bei hoher Solekonzentration steigt der Schwimmer 10 und damit die Anzeigescheibe 8 bis zum Anzeigefeld 9 auf und wird damit sichtbar. Mit fortschreitendem Verbrauch des Regeneriersalzes sinkt die Solekonzentration in dem Salzbehälter. Damit sinkt auch der Schwimmer 10 mit der Anzeigescheibe 8 nach unten. Bei Blick auf das Anzeigefeld 9 im Salzbehältergehäuse 1 ist dann keine Anzeige mehr sichtbar.

Ordnet man dem Schwimmer 10 einen Permanentmagneten zu und gleichzeitig am unteren Ende der Führungsvorrichtung 11 in einer Einziehung 12 einen Reed-Kontakt 13 an, so wird bei nach unten gesunkenem Schwimmer 10 der Permanentmagnet den Reed-Kontakt betätigen und damit eine elektrische und/oder akustische Anzeige beispielsweise an dem Bedienfeld des Geschirrspülers bewirken.

Die als Käfig ausgebildete Führungsvorrichtung 11 für den Schwimmer 10 und damit auch die Anzeigevorrichtung ist seitlich neben dem Einfüllstutzen 2 angeordnet. Die Führungsvorrichtung 11 für den Schwimmer 10 und die Anzeigevorrichtung ist ein integrierter Bestandteil des Salzbehältergehäuses 1. Das Anzeigefeld 9 im Salzbehältergehäuse 1 ist in einem Winkel von z.B. 45° angeordnet, so daß auch eine Ablesung von schräg vorne oder seitlich gut möglich ist.

Die Führungsvorrichtung 11 für den Schwimmer 10 kann nach Fig. 2 auch direkt am Einfüllstutzen 2 befestigt sein. Die Führungsvorrichtung 11 für den Schwimmer wird beim Abschrauben des Verschlußdeckels 4 nicht aus dem Salzbehälter herausgenommen. Auch hier ist die Führungsvorrichtung 11 als Käfig ausgebildet, so daß die in dem Salzbehälter 1 befindliche Salzsole den Schwimmer 10 gut umspülen kann.

Die in das Salzbehältergehäuse 1 integrierte Führungsvorrichtung 11 gemäß der vorliegenden Erfindung ist lösbar in dem Salzbehältergehäuse befestigt. Die Lösbarkeit der als Käfig ausgebildeten Führungsvorrichtung 11 ermöglicht es, diesen herauszunehmen und ihn von Ablagerungen der Salzsole zu reinigen. Die Führungsvorrichtung 11 ist dabei in dem Salzbehältergehäuse 1 eingeschnappt, was jedoch in den Fig. 1 und 2 nicht näher dargestellt ist. Eine weitere Möglichkeit besteht darin, die Führungsvorrichtung für den Schwimmer 10 derart auszubilden, daß der Schwimmer z.B. durch Klappen der Führungsvorrichtung 11 herausnehmbar ist. Man kann dann durch Einfüllen von Wasser oder mit Hilfe einer entsprechenden Bürste die Führungsvorrichtung bei herausgenommenem Schwimmer reinigen. Die Führungsvorrichtung 11 kann am Gehäuse 1 auch betriebsmäßig lösbar befestigt sein, so daß sie zum Reinigen herausgenommen werden kann. Die Führungsvorrichtung 11 sowie der Schwimmer 10 und die Anzeigescheibe 8 können bei beiden Ausführungsbeispielen jeweils rund, rechteckig oder in jeder anderen geeigneten Form ausgeführt sein.

**Patentansprüche**

1. Salzbehälter (1) mit einer Anzeigevorrichtung (8, 9, 10, 13) für die Solekonzentration der Enthärtungsanlage eines Geschirrspülers, der bei geöffnetem Spülbehälter von außen zugänglich und mit einem Verschlußdeckel (4) versehen ist, wobei die Anzeigevorrichtung (8, 9, 10, 13) eine mechanische und/oder elektrische Anzeige ermöglicht und die Messung der Solekonzentration mit Hilfe eines im Salzbehälter (1) in einer Führungsvorrichtung (11) geführten Schwimmers (10) erfolgt, dadurch gekennzeichnet, daß die Führungsvorrichtung im Bereich des Einfüllstutzens (2) an der Innenwandung des Salzbehältergehäuses (1) derart angeordnet ist, daß die Führungsvorrichtung (11) und der Schwimmer (10) über den Einfüllstutzen (2) zugänglich sind.

2. Salzbehälter nach Anspruch 1, dadurch gekennzeichnet, daß die Führungsvorrichtung (11) lösbar an der Innenwandung des Salzbehältergehäuses (1) befestigt ist.

3. Salzbehälter nach Anspruch 1, dadurch gekennzeichnet, daß die Führungsvorrichtung (11) an der Innenwandung des Einfüllstutzens (2) befestigt ist.

**Claims**

1. A salt container (1) having an indication device (8, 9, 10, 13) for the brine concentration of the softening equipment of a dish washer, which, when the rinsing container is opened, is accessible from the outside and is provided with a closure cover (4), while the indication device (8, 9, 10, 13) permits a mechanical and/or an electrical indication and the measurement of the brine concentration takes place by means of a floater (10) guided in a guide device (11) in the salt container (1), characterized in that the guide device is arranged at the area of the feeding socket (2) at the inner wall of the salt container housing (1) in such a manner that the guide device (11) and the floater (10) are accessible through the feeding socket (2).

2. A salt container as claimed in Claim 1, characterized in that the guide device (11) is detachably secured to the inner wall of the salt container housing (1).

3. A salt container as claimed in Claim 1, characterized in that the guide device (11) is secured to the inner wall of the feeding socket (2).

**Revendications**

1. Récipient à sel (1) muni d'un dispositif d'indication (8, 9, 10, 13) pour la concentration du sel dans un adoucisseur d'eau d'une machine à laver la vaisselle qui est accessible à partir de l'extérieur lorsque la cuve de lavage est ouverte et qui est muni d'un couvercle de fermeture (4), le dispositif d'indication (8, 9, 10, 13) permettant une indication mécanique et/ou électrique et la mesure de la concentration du sel étant effectuée à l'aide d'un flotteur (10) guidé dans le récipient à sel (1) dans un dispositif de guidage (11), caractérisé en ce qu'à proximité du raccord de remplissage (2) le dispositif de guidage est disposé sur la paroi intérieure du boîtier du récipient à sel (1) de façon que le dispositif de guidage (11) et le flotteur (10) soient accessibles par l'intermédiaire du raccord de remplissage (2).

2. Récipient à sel selon la revendication 1, caractérisé en ce que le dispositif de guidage (11) est fixé de façon amovible sur la paroi intérieure du boîtier de récipient à sel (1).

3. Récipient à sel selon la revendication 1, caractérisé en ce que le dispositif de guidage (11) est fixé sur la paroi intérieure du raccord de remplissage (2).

# FIG.1

# FIG.2